# EUROPEAN PATENT APPLICATION

(11) **EP 4 852 350 A1**
(43) Date of publication of application: **09.12.2026**
(21) Application number: 25773017.6
(22) Date of filing: 17.03.2025
(51) Int. Cl.: H04J 3/16

(54) **DATA TRANSMISSION METHOD AND APPARATUS**

(30) Priority: 22.03.2024 CN 202410341230
(71) Applicant: HUAWEI TECHNOLOGIES CO., LTD., Shenzhen, Guangdong 518129 (CN)
(72) Inventor: SU, Wei, Shenzhen, Guangdong 518129 (CN)
(74) Representative: Huawei European IPR
(86) International application number: PCT/CN2025/082880
(87) International publication number: WO 2025/195318

(57) **Abstract**

This application provides a method for transmitting data and an apparatus, which can be applied to an OTN system, to reduce processing costs during mapping of service data and improve system performance. The method includes: first mapping i first optical transport network OTN signals to a second OTN signal, where the second OTN signal includes n third OTN signals; and then generating a fourth OTN signal from the second OTN signal at an interleaving granularity of X bytes, and sending the fourth OTN signal. A mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1.

## Description

This application claims priority to Chinese Patent Application No. 202410341230.8, filed with the China National Intellectual Property Administration on March 22, 2024, and entitled "METHOD FOR TRANSMITTING DATA AND APPARATUS", which is incorporated herein by reference in its entirety.

### TECHNICAL FIELD

This application relates to the field of optical transport networks, and more specifically, to a method for transmitting data and an apparatus.

### BACKGROUND

With the development of optical transport network (optical transport network, OTN) technologies, OTN technology with a transmission rate exceeding 1 Tbit/s has gradually become a research hotspot.

How to simplify a processing procedure of mapping client service data to a beyond-1T OTN signal to reduce a bit rate of a beyond-1T physical interface is a problem to be resolved.

### SUMMARY

This application provides a method for transmitting data and an apparatus, to reduce processing costs during mapping of service data and improve system performance.

According to a first aspect, an embodiment of this application provides a method for transmitting data. The method may be performed by an OTN device or a component (such as a chip, an optical module, or a chip system) in the OTN device. This is not limited in this application. Specifically, the method is performed by a sending device, and the method includes: mapping i first optical transport network OTN signals to a second OTN signal, where the second OTN signal includes n third OTN signals, a mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1; generating a fourth OTN signal from the second OTN signal at an interleaving granularity of X bytes; and sending the fourth OTN signal.

According to the foregoing solution, a mapping granularity for mapping each first OTN signal to the second OTN signal and an interleaving granularity for performing interleaving on the second OTN signal to the fourth OTN signal are in an integer multiple relationship, so that processing costs can be reduced, thereby improving system performance.

With reference to the first aspect, in some implementations of the first aspect, X is 32.

In some embodiments, the mapping granularity or the interleaving granularity may alternatively be represented by using bits. For example, the mapping granularity used for mapping the j^{th} first OTN signal to the second OTN signal is nⱼ*Y bits, and the fourth OTN signal is generated from the second OTN signal at an interleaving granularity of Y bits. When the mapping granularity or the interleaving granularity are represented by using bits, Y bits do not necessarily correspond to an integer quantity of bytes. For example, the mapping granularity used for mapping the j^{th} first OTN signal to the second OTN signal is nⱼ*255 bits, and 255 bits are less than 32 bytes. For example, the mapping granularity used for mapping the j^{th} first OTN signal to the second OTN signal is nⱼ*256 bits, and 256 bits are equal to 32 bytes.

With reference to the first aspect, in some implementations of the first aspect, the fourth OTN signal includes n slots, and the second OTN signal to which the j^{th} first OTN signal is mapped corresponds to nⱼ slots of the n slots.

With reference to the first aspect, in some implementations of the first aspect, each of the n slots is at 100 Gbit/s.

According to the foregoing solution, the rate of the j^{th} first OTN signal is nⱼ times the base rate, and the second OTN signal to which the j^{th} first OTN signal is mapped corresponds to the nⱼ slots. That is, in the solution of this application, the base rate is aligned with a rate corresponding to each slot in the fourth OTN signal, so that a mapping procedure can be simplified, thereby helping improve mapping efficiency.

With reference to the first aspect, in some implementations of the first aspect, the n third OTN signals are n flexible optical transport network FlexO instances, the second OTN signal to which the j^{th} first OTN signal is mapped is nⱼ FlexO instances, the fourth OTN signal includes the n FlexO instances, and a rate of each of the n FlexO instances is 100 Gbit/s.

With reference to the first aspect, in some implementations of the first aspect, the n third OTN signals are n FlexO instances, the second OTN signal to which the j^{th} first OTN signal is mapped is an OTN signal formed by nⱼ FlexO instances, the fourth OTN signal includes the n FlexO instances, and a rate of each of the n FlexO instances is 100 Gbit/s.

With reference to the first aspect, in some implementations of the first aspect, n=n₁+n₂+...+nⱼ+nᵢ.

According to the foregoing solution, the fourth OTN signal with a large bandwidth and a high rate is formed by using the n FlexO instances, so that compatibility with an existing FlexO instance can be implemented.

With reference to the first aspect, in some implementations of the first aspect, the rate of the j^{th} first OTN signal is 100 Gbit/s*nⱼ.

With reference to the first aspect, in some implementations of the first aspect, a rate of the fourth OTN signal is 1.6 Tbit/s.

With reference to the first aspect, in some implementations of the first aspect, the fourth OTN signal includes an overhead area, the overhead area includes a payload type PT, and the PT indicates that a slot granularity is 100 Gbit/s.

With reference to the first aspect, in some implementations of the first aspect, the first OTN signal is an optical data unit ODU. The first OTN signal may alternatively be a FlexO channel layer signal.

According to a second aspect, an embodiment of this application provides a method for transmitting data. The method may be performed by an OTN device or a component (such as a chip, an optical module, or a chip system) in the OTN device. This is not limited in this application. Specifically, the method is performed by a receiving device, and the method includes: receiving a fourth OTN signal; deinterleaving the fourth OTN signal by using X bytes to obtain a second OTN signal, where the second OTN signal includes n third OTN signals; and demapping i first OTN signals from the second OTN signal, where a mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1.

With reference to the second aspect, in some implementations of the second aspect, X is 32.

With reference to the second aspect, in some implementations of the second aspect, the fourth OTN signal includes n slots, and the second OTN signal to which the j^{th} first OTN signal is mapped corresponds to nⱼ slots of the n slots.

With reference to the second aspect, in some implementations of the second aspect, each of the n slots is at 100 Gbit/s.

With reference to the second aspect, in some implementations of the second aspect, the n third OTN signals are n flexible optical transport network FlexO instances, the second OTN signal to which the j^{th} first OTN signal is mapped is nⱼ FlexO instances, the fourth OTN signal includes the n FlexO instances, and a rate of each of the n FlexO instances is 100 Gbit/s.

With reference to the second aspect, in some implementations of the second aspect, the n third OTN signals are n FlexO instances, the second OTN signal to which the j^{th} first OTN signal is mapped is an OTN signal formed by nⱼ FlexO instances, the fourth OTN signal includes the n FlexO instances, and a rate of each of the n FlexO instances is 100 Gbit/s.

With reference to the second aspect, in some implementations of the second aspect, n=n₁+n₂+...+nⱼ+nᵢ.

With reference to the second aspect, in some implementations of the second aspect, the rate of the j^{th} first OTN signal is 100 Gbit/s*nⱼ.

With reference to the second aspect, in some implementations of the second aspect, a rate of the fourth OTN signal is 1.6 Tbit/s.

With reference to the second aspect, in some implementations of the second aspect, the fourth OTN signal includes an overhead area, the overhead area includes a payload type PT, and the PT indicates that a slot granularity is 100 Gbit/s.

With reference to the second aspect, in some implementations of the second aspect, the first OTN signal is an optical data unit ODU. The first OTN signal may alternatively be a FlexO channel layer signal.

According to a third aspect, an embodiment of this application provides an apparatus for transmitting data. The apparatus is configured to perform the method provided in the first aspect, or is configured to perform the method provided in the second aspect. Specifically, the apparatus may include units and/or modules configured to perform the method provided in any one of the first aspect or the foregoing implementations of the first aspect, or the apparatus may include units and/or modules configured to perform the method provided in any one of the second aspect or the foregoing implementations of the second aspect, for example, a processing module and a transceiver module.

In an implementation, the apparatus for transmitting data may include units and/or modules configured to perform the method provided in any one of the first aspect or the foregoing implementations of the first aspect, and is a transmitter device. The transceiver module may be a transceiver or an input/output interface. The processing module may be at least one processor. Optionally, the transceiver may be a transceiver circuit. Optionally, the input/output interface may be an input/output circuit.

Alternatively, the apparatus for transmitting data is a chip, a chip system, or a circuit in the transmitter device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

In another implementation, the apparatus for transmitting data may include units and/or modules configured to perform the method provided in any one of the second aspect or the foregoing implementations of the second aspect, and is a receiver device. The transceiver module may be a transceiver or an input/output interface. The processing module may be at least one processor. Optionally, the transceiver may be a transceiver circuit. Optionally, the input/output interface may be an input/output circuit.

Alternatively, the apparatus for transmitting data is a chip, a chip system, or a circuit in the receiver device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fourth aspect, an embodiment of this application provides a processor, configured to perform the methods provided in the foregoing aspects.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a fifth aspect, an embodiment of this application provides a computer-readable storage medium. The computer-readable storage medium stores program code to be executed by a device, and the program code is used to perform the method provided in any one of the implementations of the first aspect or the second aspect.

According to a sixth aspect, an embodiment of this application provides a computer program product including instructions. When the computer program product runs on a computer or a processor, the computer or the processor is caused to perform the method provided in any one of the implementations of the first aspect or the second aspect.

According to a seventh aspect, an embodiment of this application provides a chip. The chip includes a processor and a communication interface. The processor reads, through the communication interface, instructions stored in a memory, to perform the method provided in any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect or the second aspect.

According to an eighth aspect, an embodiment of this application provides a network device. The network device includes: a processor and an input/output interface, configured to perform the method provided in any one of the implementations of the first aspect or the second aspect. The input/output interface is configured to: receive and send an OTN signal, and the processor is configured to process the OTN signal.

According to a ninth aspect, an embodiment of this application provides an optical module. The optical module includes a signal processor and an optical transmitter component. The signal processor is configured to perform the method provided in any one of the implementations of the first aspect; and the optical transmitter component is configured to: convert a fourth OTN signal into an optical signal, and send the optical signal.

According to a tenth aspect, an embodiment of this application provides an optical module. The optical module includes a signal processor and an optical receiver component.

The optical receiver component is configured to: receive an optical signal, and convert the optical signal into the fourth OTN signal.

The signal processor is configured to perform the method provided in any one of the implementations of the second aspect.

For specific beneficial effects achieved by the second aspect to the tenth aspect, refer to the descriptions of the beneficial effects in the first aspect. Details are not described herein again.

### BRIEF DESCRIPTION OF DRAWINGS

FIG. 1 is a diagram of an OTN optical network system to which an embodiment of this application is applicable;
FIG. 2 is a diagram of a hardware structure of an OTN device to which an embodiment of this application is applicable;
FIG. 3 is a diagram of a hardware structure of an optical module to which an embodiment of this application is applicable;
FIG. 4 is a schematic flowchart of a method 400 for transmitting data according to an embodiment of this application;
FIG. 5 is a first diagram of mapping i ODUflex signals to n FlexO instances at a granularity of an integer multiple of 32 bytes (or 256 bits), and generating a FlexO-n signal by interleaving the n FlexO instances at a granularity of 32 bytes according to an embodiment of this application;
FIG. 6 is a second diagram of separately mapping i ODUflex signals to n FlexO instances at a granularity of an integer multiple of 32 bytes (or 256 bits), and generating a FlexO-n signal by interleaving the n FlexO instances at a granularity of 32 bytes according to an embodiment of this application;
FIG. 7 is a block diagram of an apparatus 700 for transmitting data according to an embodiment of this application;
FIG. 8 is a diagram of a possible structure of a device for transmitting data according to an embodiment of this application; and
FIG. 9 is a diagram of a chip system 1200 according to an embodiment of this application.

### DESCRIPTION OF EMBODIMENTS

For ease of understanding embodiments of this application, the following descriptions are provided.

First, the terms such as "first", "second", and various numeric numbers in the following text descriptions or accompanying drawings in embodiments of this application are merely used for differentiation for ease of description, but are not used to limit the scope of embodiments of this application. For example, different OTN signals are distinguished from each other.

Second, the terms "include", "have" and any other variants in embodiments of this application shown below are intended to cover the non-exclusive inclusion. For example, a system, product, or device that includes a series of units is not necessarily limited to those units expressly listed, but may include other units not expressly listed or inherent to such a product or device.

Third, in embodiments of this application, the term such as "example" or "for example" represents an example, an illustration, or a description. Any embodiment or design solution described as "example" or "for example" should not be explained as being more preferred or having more advantages than another embodiment or design solution. The word like "example" or "for example" is used to present a related concept in a specific manner for ease of understanding.

Fourth, unless otherwise limited, all terms (including technical and scientific terms) used in this application have same meanings as understood usually by a person of ordinary skill in the art to which this application belongs.

Fifth, embodiments of this application are described by using an example of mapping of a flexible optical data unit (flexible optical data unit, ODUflex). However, the solutions of this application are not limited thereto. A method for transmitting data provided in this application can be further applied to another ODU signal.

Sixth, in this application, "sending" and "receiving" indicate signal transmission directions. For example, "receiving information from YY" may be understood as that a source of the information is YY, and may include direct receiving from YY through a communication interface, or may include indirect receiving from YY via another unit or module through a communication interface. "Sending" may also be understood as "outputting" of a chip interface, and "receiving" may also be understood as "inputting" of the chip interface. In other words, sending and receiving may be performed between devices, for example, between a sending device and a receiving device, or may be performed in a device. For example, sending or receiving is performed between components, assemblies, chips, software modules, or hardware modules in a device through a bus, a wire, or an interface.

Seventh, in the solutions provided in this application document, the sending device may be referred to as a transmitter device, a transmitting node, a sending node, or the like. Similarly, the receiving device may be referred to as a receiver device, a receiving node, a receiving node, or the like.

Eighth, in the solutions of this application, a "signal" may also be referred to as a "frame" or a "data frame". For example, an OTN may be referred to as an OTN signal, an OTN frame, or an OTN data frame. It should be noted that in descriptions of a data structure that carries service data, the term "signal" is generally understood as a "frame". In descriptions of a carrier that carries service data or used to describe transmission of service data, the term "signal" is generally understood as a "signal". In the following descriptions, the "frame" and the "signal" are not specially distinguished from each other in this application.

Ninth, in the solutions of this application, the OTN signal is referred to as an OTN frame, an OTN data frame, or the like. The OTN signal may include an optical payload unit (optical payload unit, OPU) signal, an ODU signal (for example, ODUk or ODUflex), an optical transport unit (optical transport unit, OTU) signal (for example, OTUk or OTUCn, where k represents different rate levels, and Cn represents a variable rate), a FlexO signal, and the like. The FlexO signal includes a FlexO instance, a FlexO interface signal (for example, FlexO-n, FlexO-ne, FlexO-x-FEC, or FlexO-x-FEC-m), and a FlexO interface signal whose rate exceeds 100 Gbit/s and that is defined by another OTN signal in future technology development.

Tenth, in embodiments of this application, service data is a service carried in an optical transport network or a metropolitan transport network. For example, the service may be an Ethernet service, a packet service, or a wireless backhaul service. The service data may also be referred to as a service signal, client data, or client service data. It should be understood that a type of the service data is not limited in embodiments of this application.

The following describes the technical solutions of this application in detail with reference to the accompanying drawings.

Embodiments of this application are applicable to an optical network such as an OTN. One OTN is usually formed by connecting a plurality of devices through an optical fiber, and may constitute different topology types such as a linear topology, a ring topology, and a mesh topology based on specific requirements.

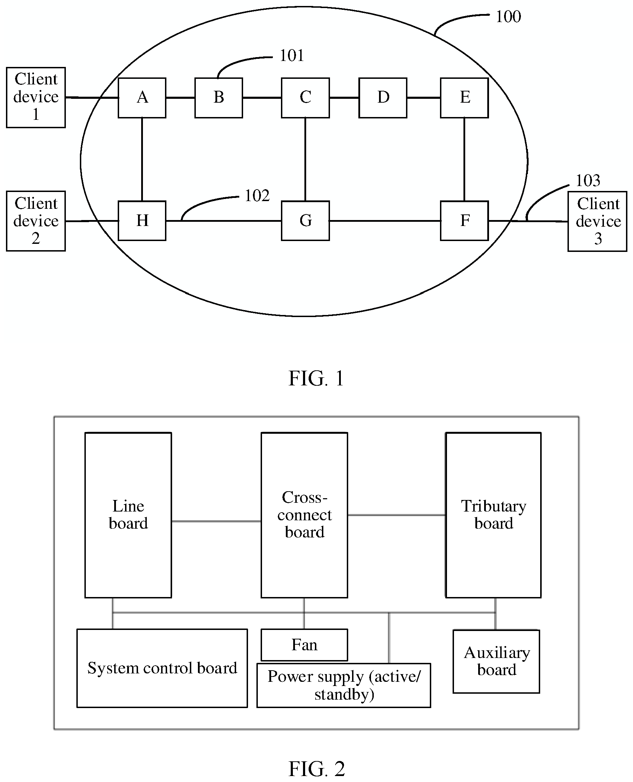

FIG. 1 is a diagram of an OTN optical network system to which an embodiment of this application is applicable. As shown in FIG. 1, the OTN 100 includes eight interconnected OTN devices 101, that is, devices A to H. 102 indicates an optical fiber, configured to connect two devices; and 103 indicates a client service interface, configured to: receive or send client service data. As shown in FIG. 1, the OTN 100 is configured to perform transmission of the service data for client devices 1 to 3. The client devices 1 to 3 may be Ethernet devices, and the service data may be Ethernet service data. The client device is connected to the OTN device through the client service interface. For example, in FIG. 1, the client devices 1 to 3 are respectively connected to the OTN devices A, H, and F.

Based on an actual requirement, one OTN device may have different functions. Usually, OTN devices are classified into an optical layer device, an electrical layer device, and a photoelectric hybrid device. The optical layer device is a device that can process an optical layer signal, for example, an optical amplifier or an optical add/drop multiplexer. The optical amplifier is configured to amplify an optical signal, to support a longer transmission distance while ensuring specific performance of the optical signal. The optical add/drop multiplexer is configured to perform space transformation on the optical signal, so that the optical signal can be output from different output ports (sometimes also referred to as directions). The electrical layer device is a device that can process an electrical layer signal, for example, a device that can process an OTN signal. The photoelectric hybrid device is a device that has a capability of processing an optical layer signal and an electrical layer signal. It should be noted that one OTN device may integrate a plurality of different functions based on a specific integration requirement. Technical solutions provided in this application are applicable to OTN devices that have different forms and degrees of integration and that each include an electrical layer function.

FIG. 2 is a diagram of a hardware structure of an OTN device to which an embodiment of this application is applicable. Specifically, the OTN device may include one or more of a tributary board (tributary board), a line board (line board), and a cross-connect board (cross-connect board), and may further include a system control board, and one or more of a power supply board, a fan board, and an auxiliary board. The line board may also be an optical layer processing board. Based on specific requirements, devices may include different types and quantities of boards. For example, an OTN device serving as a core node may have no tributary board. An OTN device serving as an edge node may have a plurality of tributary boards. The power supply board is configured to supply power to the OTN device, and may include a primary power supply and a backup power supply. The fan board is configured to dissipate heat for the device. The auxiliary board is configured to provide an auxiliary function, for example, provide an external alarm or access an external clock. The tributary board, the cross-connect board, and the line board are mainly configured to process an OTN electrical-layer signal (which may also be referred to as an OTN frame). The tributary board is configured to: receive and send a plurality of client signals (also referred to as client services). The client signal may include a constant bit rate (constant bit rate, CBR) signal (for example, a synchronous digital hierarchy (synchronous digital hierarchy, SDH) signal) and a packet signal (for example, an Ethernet signal). Further, the tributary board may include a client-side optical module and a signal processor. The client-side optical module is configured to: receive and/or send the client signal. The signal processor is configured to implement mapping and demapping between the client signal and the OTN frame. The signal processor may be located inside the client-side optical module, or may be located outside the client-side optical module. If the signal processor is a combination of a plurality of chips, one (or some) of the chips may be located inside the client-side optical module, and other chips are located outside the client-side optical module. The cross-connect board is configured to: exchange OTN frames, for example, complete exchange of one or more types of OTN frames. The line board mainly processes a line-side OTN frame. Specifically, the line board may include a line-side optical module and a signal processor. The line-side optical module is configured to: receive and/or send an optical signal that carries the OTN frame. The signal processor is configured to: multiplex and demultiplex or map and demap the line-side OTN frame. The signal processor may be located inside the line-side optical module, or may be located outside the line-side optical module. If the signal processor is a combination of a plurality of chips, one (or some) of the chips is (are) located inside the line-side optical module, and other chips are located outside the line-side optical module. The client-side optical module or the line-side optical module may also be collectively referred to as an optical module or an optical transceiver. The signal processor in the client-side optical module or the line-side optical module may be an optical digital signal processor (optical digital signal processor, oDSP) or a framer (Framer), or may include a combination of the framer and the oDSP. The system control board is configured to implement system control. Specifically, the system control board may collect information from different boards, or send a control instruction to a corresponding board. Unless otherwise specified, there may be one or more specific components (for example, tributary boards). This is not limited in this application.

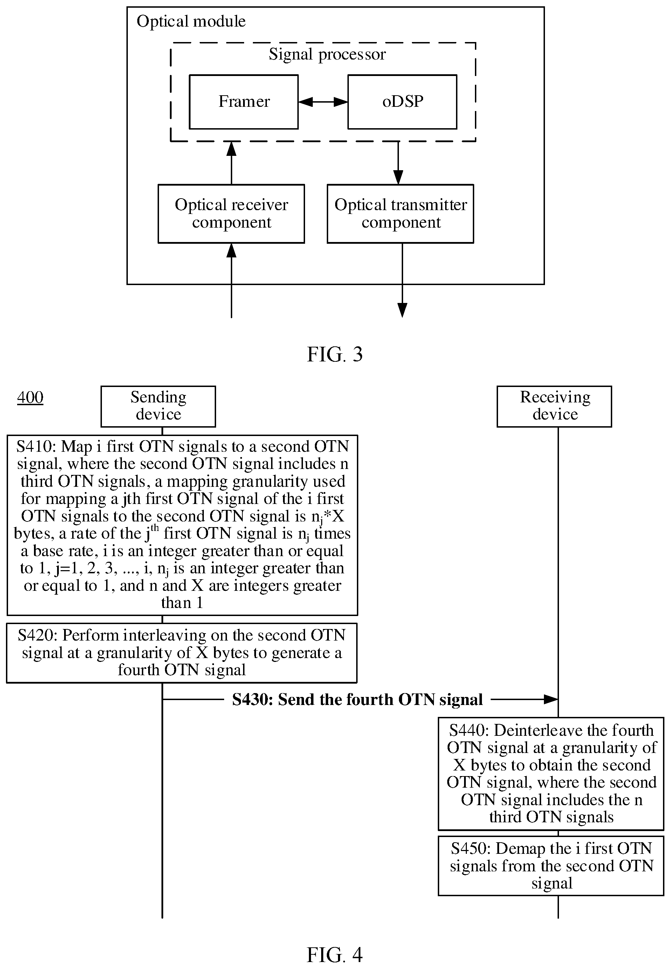

FIG. 3 is a diagram of a hardware structure of an optical module to which an embodiment of this application is applicable. As shown in FIG. 3, the optical module may include a signal processor, an optical transmitter component, and an optical receiver component. As described above, the signal processor may include a framer or an oDSP, or may include a combination of the framer and the oDSP. The optical module may be a unidirectional optical module, that is, includes one of an optical transmitter component and an optical receiver component. Alternatively, the optical module may be a bidirectional optical module, that is, includes both the optical transmitter component and the optical receiver component.

The framer may also be referred to as a service chip or a physical layer (physical layer, PHY) chip, and is mainly configured to complete encapsulation/decapsulation (or referred to as mapping/demapping) of an OTN electrical layer. The framer is configured to encapsulate a client signal to an OTN frame, or decapsulate the OTN frame to obtain the client signal. For example, the framer may encapsulate the client signal to an ODU, encapsulate a low-rate ODU to a high-rate ODU, encapsulate an ODU to a flexible OTN (FlexO) frame, or directly encapsulate the client signal to a FlexO. Decapsulation is a reverse process of encapsulation.

The oDSP is configured to perform digital signal processing on the OTN frame generated by the framer, or perform digital signal processing on an electrical signal obtained by the optical receiver component. The oDSP is configured to complete one or more of processing such as forward error correction (forward error correction, FEC), clock recovery, an equalizer, sequence detection, and signal decision.

FEC is an error control technique. Specifically, before a signal is sent to a transmission channel, the signal is encoded in advance according to a particular algorithm and redundant data having a feature of the signal is added; and a receiver decodes a received signal according to a corresponding algorithm, to identify and correct an error code generated during transmission.

The optical transmitter component is also referred to as a transmitter optical sub-assembly (transmitter optical sub-assembly, TOSA), and is configured to convert an electrical signal into an optical signal. The optical transmitter component may include a light source, a driver chip, a modulator, and the like. The light source may be a semiconductor laser (also referred to as a laser diode (laser diode, LD)) or a light emitting diode (light emitting diode, LED). The driver chip processes an electrical signal generated by the oDSP, and drives the light source to emit a modulated optical signal. The modulated optical signal is transmitted to an optical fiber line through an optical fiber interface.

The optical receiver component is also referred to as a receiver optical sub-assembly (receiver optical subassembly, ROSA), and is configured to convert an optical signal into an electrical signal. The optical receiver component may include a photodetector, an amplifier, and the like. The photodetector may be an avalanche photodiode (avalanche photodiode, APD) or a PIN photodiode. The amplifier may include a preamplifier and a postamplifier. After the optical signal is input from the optical fiber interface, the photodetector converts the optical signal into the electrical signal, and the amplified electrical signal is output through the amplifier.

When a current OTN signal (such as ODUk or fgODUflex) is mapped into a FlexO interface signal, a plurality of layers of mapping processing such as an ODUCn/OTUCn layer are involved, and a mapping granularity of mapping the OTN signal into a FlexO instance (instance) is different from an interleaving granularity of interleaving the FlexO instance into the FlexO interface signal, resulting in excessively high processing costs and low efficiency. In view of this, this application provides a method for transmitting data and an apparatus, to delete a mapping process at an ODUCn/OTUCn layer, simplify a procedure of mapping an OTN signal into a FlexO interface signal, and improve mapping efficiency.

FIG. 4 is a schematic flowchart of a method 400 for transmitting data according to an embodiment of this application. As shown in FIG. 4, a sending device may be an OTN device, or may be performed by a component (such as a chip or a chip system) in the OTN device. A receiving device may be an OTN device, or may be performed by a component (such as a chip or a chip system) in the OTN device. Specifically, the method includes the following plurality of steps.

S410: The sending device maps i first optical transport network OTN signals to a second OTN signal, where the second OTN signal includes n third OTN signals. A mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1.

S420: The sending device performs interleaving on the second OTN signal at a granularity of X bytes to generate a fourth OTN signal.

S430: The sending device sends the fourth OTN signal, and correspondingly, the receiving device receives the fourth OTN signal.

S440: The receiving device deinterleaves the fourth OTN signal at a granularity of X bytes to obtain the second OTN signal, where the second OTN signal includes the n third OTN signals.

S450: The receiving device demaps the i first OTN signals from the second OTN signal.

It should be noted that generation of the i first OTN signals is not limited in this application. In some embodiments, the i first OTN signals are generated by mapping service data to first OTN frames by the OTN device after the OTN device receives the service data; or in some other embodiments, the i first OTN signals are generated by mapping the service data to the first OTN frames by the OTN device after the OTN device receives an OTN signal from another device, and demaps the service data from the OTN signal. It may be understood that when demapping the i first OTN signals from the second OTN signal, the receiving device obtains the service data from the i first OTN signals through demapping.

Specifically, the i first OTN signals are OTN signals that carry the service data, and the i first OTN signals may be ODU signals, for example, may be i pieces of ODUflex. For example, when the i first OTN signals are the pieces of ODUflex, the i first OTN signals are respectively a 1^{st} ODUflex #1, 2^{nd} ODUflex #2, 3^{rd} ODUflex #3, ..., and i^{th} ODUflex #i. A rate of each first OTN signal may be represented as an integer multiple of a base rate. For example, a rate of a j^{th} first OTN signal may be represented as nⱼ*Base rate, where nⱼ is an integer greater than or equal to 1, and j=1, 2, 3, ..., i. For example, when the i first OTN signals are i pieces of ODUflex, a rate of the 1^{st} ODUflex #1 may be represented as n₁*Base rate, and a rate of the 2^{nd} ODUflex #2 may be represented as n₂*Base rate. Similarly, a rate of the i^{th} ODUflex #i may be represented as nᵢ*Base rate, and details are not described herein. It may be understood that a rate of the first OTN signal may also be the same as the base rate. For example, if a 1^{st} first OTN signal is the same as the base rate, n₁ is equal to 1. It may be further understood that rates of the i first OTN signals are not limited in this application, and may be completely the same, partially the same, or completely different. It should be noted that, in the solution of this application, the base rate may be around 100 Gbit/s, that is, approximately 100 Gbit/s, for example, 100.844 Gbit/s; or the base rate may be 100 Gbit/s.

The second OTN signal is an OTN signal generated by mapping the i first OTN signals, and includes the n third OTN signals. Optionally, the second OTN signal is FlexO instances. For example, when the second OTN signal is the FlexO instances, the n third OTN signals included in the second OTN signal are respectively a 1^{st} FlexOs #1, a 2^{nd} FlexOs #2, ..., and an n^{th} FlexOs #n. A rate of each FlexO instance may be the same as the base rate, and is approximately 100 Gbit/s. For example, the rate of each FlexO instance is 100.844 Gbit/s, 105643510.782 kbit/s, 100622438.327 kbit/s, or the like.

The fourth OTN signal is generated by performing interleaving on the second OTN signal. Optionally, a 5^{th} OTN signals is a FlexO interface signal, for example, a FlexO-n signal (or another interface signal, where for details, refer to the foregoing related descriptions, and details are not described herein again). A rate of the 5^{th} OTN signals may be 1.2 Tbit/s, 1.6 Tbit/s, 2.4 Tbit/s, 3.2 Tbit/s, or the like. This is not limited in this application. In the solution of this application, the fourth OTN signal includes at least n slots (time slots or tributary slots, TS), where n is an integer greater than 1. Each slot corresponds to one third OTN signal, that is, a size of each slot may be set to a value corresponding to a rate of each third OTN signal. It may be understood that, the rate of the j^{th} first OTN signal is nⱼ times the base rate. Therefore, when a rate of the third OTN signal is set to the base rate, the j^{th} first OTN signal corresponds to nⱼ third OTN signals in the second OTN signal, in other words, corresponds to nⱼ slots (the nⱼ slots are not necessarily consecutive slots) in the fourth OTN signal. For example, if the i first OTN signals are the i pieces of ODUflex, the second OTN signal is n FlexO instances, and the fourth OTN signal is FlexO-n, the j^{th} first OTN signal ODUflex #j is mapped to nⱼ FlexO instances, and the nⱼ FlexO instances are interleaved into nⱼ slots in the FlexO-n.

It should be noted that "mapping" (mapping) and "interleaving" (interleaving) are used in this application. A difference between "mapping" and "interleaving" may be understood as that corresponding mapping overheads are generated when a to-be-mapped signal is mapped, but no new overhead is generated when a to-be-interleaved signal is interleaved. Specifically, in the solution of this application, the i first OTN signals are to-be-mapped signals. When the i first OTN signals are mapped to the second OTN signal, the i first OTN signals are carried in a payload area of the second OTN signal, and overheads generated during the mapping are carried in an overhead area of the second OTN signal. The n third OTN signals in the second OTN signal are to-be-interleaved signals. When the n third OTN signals are interleaved into the fourth OTN signal, the n third OTN signals are rearranged and reused to the fourth OTN signal, no new overhead is generated in this process, and content of the n third OTN signals remains unchanged.

In the solution of this application, a mapping granularity for mapping each first OTN signal to the second OTN signal and an interleaving granularity for performing interleaving on the second OTN signal (that is, the n third OTN signals) to the fourth OTN signal are in a multiple relationship. For example, the mapping granularity for mapping the j^{th} first OTN signal to the second OTN signal is the nⱼ*X bytes, and the interleaving granularity for performing interleaving on the second OTN signal to generate the fourth OTN signal is the X bytes. That is, for the j^{th} first OTN signal, the mapping granularity is nⱼ times the interleaving granularity. It should be noted that, for the j^{th} first OTN signal, nⱼ is also a ratio of the rate of the j^{th} first OTN signal to the base rate. That is, when nⱼ is equal to 1, the mapping granularity for mapping the j^{th} first OTN signal to the second OTN signal and the interleaving granularity for performing interleaving on the second OTN signal to generate the fourth OTN signal are the same, and both are X bytes. In other words, a mapping granularity for mapping a first OTN signal whose rate is the base rate to the second OTN signal is X bytes. For example, when the base rate is 100 Gbit/s and X is 32, if the rate of the j^{th} first OTN signal is 400 Gbit/s, the rate of the j^{th} first OTN signal is 4*100 Gbit/s. In this case, nⱼ is equal to 4. A mapping granularity for mapping the first OTN signal whose rate is 400 Gbit/s to the second OTN signal is 4*32 bytes, and the fourth OTN signal is generated by performing interleaving on the second OTN signal at a granularity of 32 bytes.

It should be noted that, in the solution of this application, a value of X is not limited, for example, may be equal to 32, 16, or 64. In addition, in the example descriptions of this application, the mapping granularity or the interleaving granularity is described in a unit of bytes. In some embodiments, the mapping granularity or the interleaving granularity may alternatively be described in a unit of bits. For example, the mapping granularity used for mapping the j^{th} first OTN signal to the second OTN signal is nⱼ*Y bits. It should be noted that, when the mapping granularity or the interleaving granularity is described in the unit of bits, whether Y bits correspond to an integer quantity of bytes is not limited in this application. In other words, Y bits may be an integer quantity of bytes, or may be a non-integer quantity of bytes. It may be understood that, when the Y bits correspond to the integer quantity of bytes, the mapping granularity or the interleaving granularity may be represented by using bytes, or may be represented by using bits. For example, the mapping granularity used for mapping the j^{th} first OTN signal to the second OTN signal is the nⱼ*X bytes, which may also be expressed as follows: The mapping granularity used for mapping the j^{th} first OTN signal to the second OTN signal is nⱼ*8*X bits, where Y=8*X. Similarly, the interleaving granularity used for performing interleaving on the second OTN signal to generate the fourth OTN signal is the X bytes, which may also be expressed as follows: The interleaving granularity used for performing interleaving on the second OTN signal to generate the fourth OTN signal is 8*X bits. When Y bits correspond to a non-integer quantity of bytes, the mapping granularity or the interleaving granularity is usually represented by using bits. In this case, Y is not equal to 8*X.

In the solution of this application, there are two implementations of mapping the i first OTN signals to the second OTN signal (that is, the n third OTN signals). Specifically, in an implementation, each first OTN signal is directly mapped to n third OTN signals in the second OTN signal, and the n third OTN signals are not grouped. Alternatively, in another implementation, the n third OTN signals in the second OTN signal are grouped, to cause each first OTN signal to be mapped to a plurality of third OTN signals in a corresponding group. It should be noted that, in Implementation 2, the plurality of third OTN signals in the group corresponding to each first OTN signal may be understood as a newly formed OTN signal. When a fourth OTN signal is generated through interleaving, it may be understood as that the fourth OTN signal is generated by performing interleaving on the new OTN signal to which each first OTN signal is mapped. The following separately describes the two implementations.

Implementation 1: Each first OTN signal is directly mapped to the n third OTN signals in the second OTN signal, and the n third OTN signals are not grouped.

Specifically, when each first OTN signal is directly mapped to the second OTN signal, each first OTN signal is mapped to one or more of the n third signals in the second OTN signal. For example, the j^{th} first OTN signal is mapped to nⱼ third OTN signals at a granularity of nⱼ*X bytes, and the nⱼ third OTN signals are a part of the n third signals. After mapping of all the i first OTN signals is completed, the n third signals are interleaved at a granularity of X bytes to generate the fourth OTN signal.

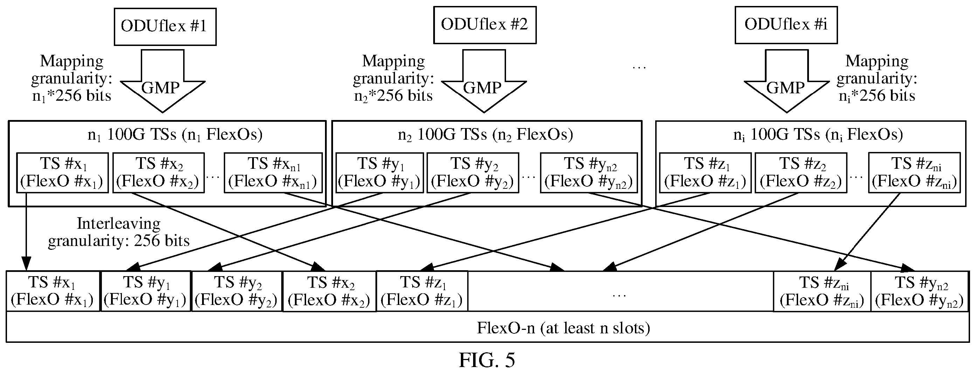

For example, a first method for transmitting data provided in this application is described with reference to FIG. 5. FIG. 5 is a first diagram of mapping i ODUflex signals to n FlexO instances at a granularity of an integer multiple of 32 bytes (or 256 bits), and generating a FlexO-n signal by interleaving the n FlexO instances at a granularity of 32 bytes according to an embodiment of this application. As shown in FIG. 5, the i ODUflex signals are a 1^{st} ODUflex signal ODUflex #1, a 2^{nd} ODUflex signal ODUflex #2, ..., and an i^{th} ODUflex signal ODUflex #i. The i ODUflex signals have a same frame structure, and may have a same rate or different rates, and the i ODUflex signals may alternatively be signals that respectively carry different service data. This is not limited. The FlexO-n signal is divided into at least n 100G slots, and each 100G slot corresponds to 100G FlexO instances. In other words, the FlexO-n signal includes at least n 100G FlexO instances, and each of the 100G FlexO instances corresponds to one 100G slot. Specifically, the ODUflex #1 may be mapped to any n₁ FlexO instances in a mapping manner of a generic mapping procedure (generic mapping procedure, GMP) at a mapping granularity of n₁*256 bits; similarly, the ODUflex #2 is mapped to n₂ FlexO instances in the mapping manner of the GMP at a mapping granularity of n₂*256 bits, ..., and the ODUflex #i is mapped to nᵢ FlexO instances in the mapping manner of the GMP at a mapping granularity of nᵢ*256 bits, to finally obtain the n FlexO instances, where n=n₁+n₂+...+nᵢ. It should be noted that the n₁ FlexO instances for the ODUflex #1 are any n₁ the n FlexO instances. During mapping, in the n₁*256 bits of the ODUflex #1 signal, 1^{st} 256 bits are mapped to an (x₁)^{th} FlexO instance of the n FlexO instances, 2^{nd} 256 bits are mapped to an (x₂)^{th} FlexO instance of the n FlexO instances, ..., and (n₁)^{th} 256 bits are mapped to an (xₙ₁)^{th} FlexO instance of the n FlexO instances, where x₁<x₂<xₙ₁. Similarly, the n₂ FlexO instance of FlexO instances for the ODUflex #2 are any n₂ FlexO instances of the n FlexO instances. During mapping, in the n₂*256 bits of the ODUflex #2 signal, 1^{st} 256 bits are mapped to a (y₁)^{th} FlexO instance of the n FlexO instances, 2^{nd} 256 bits are mapped to a (y₂)^{th} FlexO instance of the n FlexO instances, ..., and (n₁)^{th} 256 bits are mapped to a (yₙ₂)^{th} FlexO instance of the n FlexO instances, where y₁<y₂<yₙ₂. The nᵢ FlexO instances for the ODUflex #i are any nᵢ FlexO instances of the n FlexO instances. During mapping, in the nᵢ*256 bits of the ODUflex #i signal, 1^{st} 256 bits are mapped to a (z₁)^{th} FlexO instance of the n FlexO instances, 2^{nd} 256 bits are mapped to a (z₂)^{th} FlexO instance of the n FlexO instances, ..., and (nᵢ)^{th} 256 bits are mapped to a (zₙᵢ)^{th} FlexO instance of the n FlexO instances, where z₁<z₂<zₙᵢ.

When the n FlexO instances are interleaved to generate the FlexO-n signal, the n₁ FlexO instances, the n₂ FlexO instances, ..., and the nᵢ FlexO instances are interleaved at an interleaving granularity of 256 bits, to generate the FlexO-n signal. Specifically, n₁ FlexO instances to which the ODUflex #1 is mapped are interleaved into any n₁ slots in the FlexO-n, for example, a slot x₁, a slot x₂, ..., and a slot xₙ₁, where x₁<x₂<xₙ₁. The slot x₁, the slot x₂, ..., and the slot xₙ₁ respectively correspond to a 1^{st} FlexO instance, a 2^{nd} FlexO instance, ..., and an (n₁)^{th} FlexO instance of the n₁ FlexO instances, namely, an (x₁)^{th} FlexO instance, an (x₂)^{th} FlexO instance, ..., and an (xₙ₁)^{th} FlexO instance of the n FlexO instances. That is, in the n₁*256 bits of the ODUflex #1 signal, 1^{st} 256 bits are carried in the slot x₁, 2^{nd} 256 bits are carried in the slot x₂, ..., and (n₁)^{th} 256 bits are carried in the slot xₙ₁. It should be noted that the n₁ slots corresponding to the n₁ FlexO instances are any n₁ slots of at least n slots in the FlexO-n. Therefore, the slot x₁ and the slot x₂ may be two adjacent slots or two non-adjacent slots. In other words, the n₁ slots are not necessarily consecutive. Similarly, n₂ FlexO instances to which the ODUflex #2 is mapped are interleaved into any n₂ slots in the FlexO-n, for example, a slot y₁, a slot y₂, ..., and a slot yₙ₂, where y₁<y₂<yₙ₂. The slot y₁, the slot y₂, ..., and the slot yₙ₂ respectively correspond to a 1^{st} FlexO instance, a 2^{nd} FlexO instance, ..., and an (n₂)^{th} FlexO instance of the n₂ FlexO instances, namely, a (y₁)^{th} FlexO instance, a (y₂)^{th} FlexO instance, ..., and a (yₙ₂)^{th} FlexO instance of the n FlexO instances. That is, in the n₂*256 bits of the ODUflex #2 signal, 1^{st} 256 bits are carried in the slot y₁, 2^{nd} 256 bits are carried in the slot y₂, ..., and (n₂)^{th} 256 bits are carried in the slot yₙ₂. nᵢ FlexO instances to which the ODUflex #i is mapped are interleaved into any nᵢ slots in the FlexO-n, for example, a slot z₁, a slot z₂, ..., and a slot zₙᵢ, where z₁<z₂<zₙᵢ. The slot z₁, the slot z₂, ..., and the slot zₙᵢ respectively correspond to a 1^{st} FlexO instance, a 2^{nd} FlexO instance, ..., and an (nᵢ)^{th} FlexO instance of the nᵢ FlexO instances, namely, a (z₁)^{th} FlexO instance, a (z₂)^{th} FlexO instance, ..., and a (zₙᵢ)^{th} FlexO instance of the n FlexO instances. That is, in the nᵢ*256 bits of the ODUflex #i signal, 1^{st} 256 bits are carried in the slot z₁, 2^{nd} 256 bits are carried in the slot z₂, ..., and (nᵢ)^{th} 256 bits are carried in the slot zₙᵢ. It may be understood that, a mapping granularity for mapping each of the ODUflex signals to the second OTN signal may be represented as: Quantity of slots corresponding to each of ODUflex signals*256 bits.

It may be understood that, a quantity of slots included in the FlexO-n signal is greater than or equal to n. Therefore, when the quantity of slots included in the FlexO-n signal is equal to n, the n FlexO instances to which the i ODUflex signals are mapped occupy the n slots in the FlexO-n signal, that is, all the slots in the FlexO-n are used to carry valid signals. When the quantity of slots included in the FlexO-n signal is greater than n, some 100G slots in the FlexO-n signal are idle (that is, there are 100G FlexO instances to which ODUflex signals are not mapped), and are not used to carry the ODUflex signals, these unoccupied 100G slots (that is, a payload area of the 100G FlexO instances to which the ODUflex signals are not mapped) may be fixedly filled.

Implementation 2: Each first OTN signal is mapped to the plurality of third OTN signals in the corresponding group.

Specifically, the n third OTN signals are divided into i groups based on the i first OTN signals, where there are nⱼ third OTN signals included in a j^{th} group, and the nⱼ third OTN signals form a new OTN signal, which may be referred to as an intermediate OTN signal, and is used to carry the j^{th} first OTN signal. For example, if the third OTN signals are FlexO instances, the OTN signal formed by the nⱼ third OTN signals in the j^{th} group may be a FlexO-nⱼ signal, and in this case, the j^{th} first OTN signal is mapped to the FlexO-nⱼ signal at a granularity of nⱼ*X bytes. It may be understood that, after the mapping of the i first OTN signals is completed correspondingly, new OTN signals (for example, a FlexO-n₁ signal, a FlexO-n₂ signal, ..., and a FlexO-nᵢ signal) to which the first OTN signals are mapped are interleaved at a granularity of X bytes to generate the fourth OTN signal.

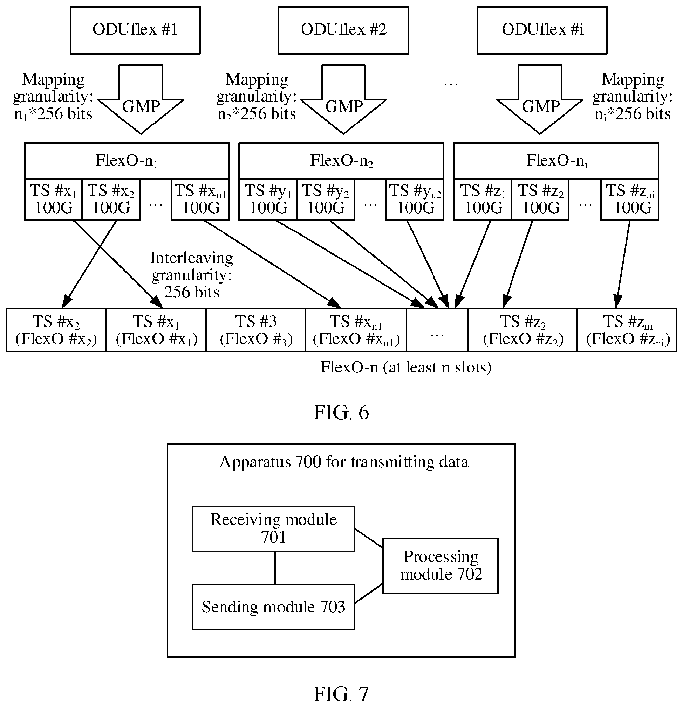

For example, a second method for transmitting data provided in this application is described with reference to FIG. 6. An example in which ODUflex signals are mapped to FlexO-n at a granularity of 32 bytes (that is, 256 bits) is used.

FIG. 6 is a second diagram of separately mapping i ODUflex signals to n FlexO instances at a granularity of an integer multiple of 32 bytes (or 256 bits), and generating a FlexO-n signal by interleaving the n FlexO instances at a granularity of 32 bytes according to an embodiment of this application. As shown in FIG. 6, the i ODUflex signals are a 1^{st} ODUflex signal ODUflex #1, a 2^{nd} ODUflex signal ODUflex #2, ..., and an i^{th} ODUflex signal ODUflex #i. The i pieces of ODUflex have a same frame structure, may have a same rate or different rates, and may respectively carry different service data. The FlexO-n signal is divided into at least n 100G slots, and each 100G slot corresponds to 100G FlexO instances. In other words, the FlexO-n signal includes at least n 100G FlexO instances, and each of the 100G FlexO instances corresponds to one 100G slot. Specifically, the ODUflex #1 is mapped to a FlexO-n₁ signal in a mapping manner of a GMP at a mapping granularity of n₁*256 bits, and the FlexO-n₁ signal corresponds to n₁ FlexO instances; the ODUflex #2 is mapped to a FlexO-n₂ signal in the mapping manner of the GMP at a mapping granularity of n₂*256 bits, and the FlexO-n₂ signal corresponds to n₂ FlexO instances; and the ODUflex #i is mapped to a FlexO-nᵢ signal in the mapping manner of the GMP at a mapping granularity of nᵢ*256 bits, and the FlexO-nᵢ signal corresponds to nᵢ FlexO instances. After the mapping of the i ODUflex signals is completed, a FlexO-n₁ frame, a FlexO-n₂ frame, and a FlexO-nᵢ frame generated by mapping the ODUflex signals are interleaved using an interleaving granularity of 256 bits, to generate the FlexO-n signal, where n=n₁+n₂+...+nᵢ.

It may be understood that, for n₁ FlexO instances corresponding to the FlexO-n₁ signal, a 1^{st} FlexO instance, a 2^{nd} FlexO instance, ..., and an (n₁)^{th} FlexO instance of the n₁ FlexO instances correspond to an (x₁)^{th} FlexO instance, an (x₂)^{th} FlexO instance, ..., and an (xₙ₁)^{th} FlexO instance of the n FlexO instances, that is, a slot x₁, a slot x₂, ..., and a slot xₙ₁ in the FlexO-n signal. For n₂ FlexO instances corresponding to the FlexO-n₂ signal, a 1^{st} FlexO instance, a 2^{nd} FlexO instance, ..., and an (n₂)^{th} FlexO instance of the n₂ FlexO instances correspond to a (y₁)^{th} FlexO instance, a (y₂)^{th} FlexO instance, ..., and a (yₙ₂)^{th} FlexO instance of the n FlexO instances, that is, a slot y₁, a slot y₂, ..., and a slot yₙ₂ in the FlexO-n signal. For nᵢ FlexO instances corresponding to the FlexO-nᵢ signal, a 1^{st} FlexO instance, a 2^{nd} FlexO instance, ..., and an (nᵢ)^{th} FlexO instance of the nᵢ FlexO instances correspond to a (z₁)^{th} FlexO instance, a (z₂)^{th} FlexO instance, ..., and a (zₙᵢ)^{th} FlexO instance of the n FlexO instances, that is, a slot z₁, a slot z₂, ..., and a slot zₙᵢ in the FlexO-n signal.

It should be noted that a mapping manner of mapping the i first OTN signals to the second OTN signal is not limited in the solutions of this application, for example, may be the GMP shown in FIG. 5 or FIG. 6.

It should be further noted that, in the solution of this application, overheads of the fourth OTN signal are not limited in this application. Optionally, an overhead area of the fourth OTN signal may include at least one of the following: a trail trace identifier TTI (Trail Trace Identifier), bit-interleaved parity-X BIP-X (Bit-Interleaved Parity-X), a backward error indication BEI (Backward Error Indication), a backward defect indication BDI (Backward Defect Indication), a status indication STAT (Status), a payload type (Payload Type, PT), a multiplex structure identifier (Multiplex Structure Identifier, MSI), a tributary port identifier (Tributary Port Identifier, TPID), and a slot occupation indication (Occupation, OCCU). The PT indicates a slot granularity of 100 Gbit/s. It may be understood that a value of the slot granularity is merely an approximate value. For details, refer to the foregoing descriptions.

The method for transmitting data provided in embodiments of this application is described above with reference to FIG. 4 to FIG. 6. In embodiments of this application, unless otherwise specified or a logic conflict occurs, terms and/or descriptions in embodiments are consistent and may be mutually referenced, and technical features in different embodiments may be combined based on an internal logical relationship thereof, to form a new embodiment.

An apparatus for transmitting data, a device for transmitting data, and a chip system provided in embodiments of this application are described below in detail with reference to FIG. 7 to FIG. 9. It should be understood that descriptions of apparatus embodiments correspond to the descriptions of the method embodiments. Therefore, for content that is not described in detail, refer to the foregoing method embodiments. For brevity, some content is not described again.

FIG. 7 is a block diagram of an apparatus 700 for transmitting data according to an embodiment of this application. The apparatus 700 for transmitting data includes a receiving module 701, and the receiving module 701 may be configured to implement a corresponding receiving function. The receiving module 701 may also be referred to as a receiving unit.

The apparatus 700 for transmitting data further includes a processing module 702, and the processing module 702 may be configured to implement a corresponding processing function.

The apparatus 700 for transmitting data further includes a sending module 703. The sending module 703 may be configured to implement a corresponding sending function, and the sending module 703 may also be referred to as a sending unit.

Optionally, the apparatus 700 for transmitting data further includes a storage unit. The storage unit may be configured to store instructions and/or data. The processing module 702 may read the instructions and/or the data in the storage unit, to cause the apparatus to implement an action of the related node in the foregoing method embodiments.

When the apparatus 700 for transmitting data may be configured to perform an action performed by the sending device or the receiving device in the foregoing method embodiments, the apparatus 700 for transmitting data may be a component in the sending device or the receiving device. The receiving module 701 is configured to perform a receiving-related operation of the sending device or the receiving device in the foregoing method embodiments, the processing module 702 is configured to perform a processing-related operation of the sending device or the receiving device in the foregoing method embodiments, and the sending module 703 is configured to perform a sending-related operation of the sending device or the receiving device in the foregoing method embodiments.

In a design, the apparatus 700 for transmitting data is configured to perform an action performed by any device in the foregoing method embodiments. In an embodiment, the apparatus 700 for transmitting data may be configured to perform an operation of the sending device in FIG. 4.

For example, the processing module 702 is configured to: map i first OTN signals to a second OTN signal, and generate a fourth OTN signal from the second OTN signal at an interleaving granularity of X bytes. The second OTN signal includes n third OTN signals, a mapping granularity used for mapping a j^{th} first OTN signal of the i first OTN signals to the second OTN signal is nⱼ*X bytes, and a rate of the j^{th} first OTN signal is nⱼ times a base rate. i is an integer greater than or equal to 1, j=1, 2, 3, ..., i, nⱼ is an integer greater than or equal to 1, and n and X are integers greater than 1.

The sending module 703 is configured to send the fourth OTN signal.

It should be understood that a specific process in which the modules perform the foregoing corresponding steps has been described in detail in the foregoing method embodiments. For brevity, details are not described herein again.

In addition, the receiving module 701, the processing module 702, and the sending module 703 in the apparatus 700 for transmitting data may further implement another operation or function of the receiving device in the foregoing methods. Details are not described herein again.

In another embodiment, the apparatus may be configured to perform an operation of the receiving device in FIG. 4.

For example, the receiving module 701 is configured to receive a fourth OTN signal.

The processing module 702 is configured to: deinterleave the fourth OTN signal at a granularity of X bytes to obtain a second OTN signal, and demap i first OTN signals from the second OTN signal. The second OTN signal includes n third OTN signals. A mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1.

It should be understood that a specific process in which the modules perform the foregoing corresponding steps has been described in detail in the foregoing method embodiments. For brevity, details are not described herein again.

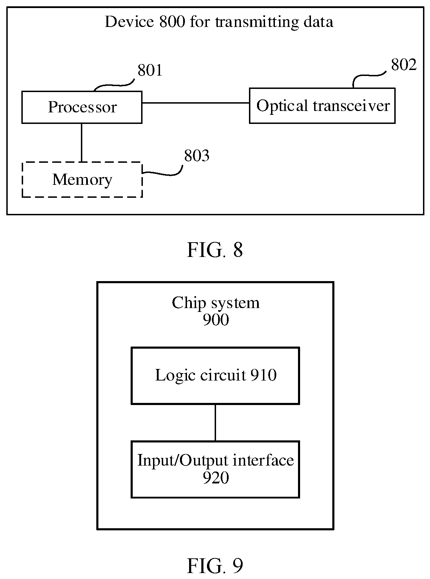

An apparatus for transmitting data provided in an embodiment of this application is described in detail below with reference to FIG. 8. It should be understood that descriptions of apparatus embodiments correspond to the descriptions of the method embodiments. Therefore, for content that is not described in detail, refer to the foregoing method embodiments. For brevity, some content is not described again.

FIG. 8 is a diagram of a possible structure of a device for transmitting data according to an embodiment of this application. The communication device is a sending device or a receiving device. As shown in FIG. 8, the communication device 800 includes a processor 801, an optical transceiver 802, and a memory 803. The memory 803 is optional. The communication device 800 may be used in a transmitting side device (for example, the sending device), and may also be used in a receiving side device (for example, the receiving device).

When the communication device is used in the transmitting side device, the processor 801 and the optical transceiver 802 are configured to implement the method performed by the sending device shown in FIG. 4. In an implementation process, steps in a processing procedure may be performed by using an integrated logic circuit of hardware in the processor 801 or instructions in a form of software, to complete the method performed by the sending device in the foregoing accompanying drawings. The optical transceiver 802 is configured to: receive a to-be-sent data frame, to send the data frame to a peer node (also referred to as the receiving device) for processing.

When the communication device is used in the receiving side device, the processor 801 and the optical transceiver 802 are configured to implement the method performed by the receiving device shown in FIG. 4. In an implementation process, steps in a processing procedure may be performed by using an integrated logic circuit of hardware in the processor 801 or instructions in a form of software, to complete the method performed by the receiving device in the foregoing accompanying drawings. The optical transceiver 802 is configured to receive a data frame sent by a peer device (also referred to as the sending device), to send the data frame to the processor 801 for subsequent processing.

The memory 803 may be configured to store instructions, so that the processor 801 may be configured to perform the steps mentioned in the foregoing figures. Alternatively, the memory 803 may be configured to store another instruction, to configure a parameter of the processor 801 to implement a corresponding function.

It should be noted that, in the diagram of the hardware structure of the network device shown in FIG. 2, the processor 801 and the memory 803 may be located in a tributary board, or may be located in a tributary-line integrated board. Alternatively, there are a plurality of processors 801 and a plurality of memories 803, which are respectively located on a tributary board and a line board, and the two boards cooperate to complete the foregoing method steps.

It should be noted that the apparatus in FIG. 8 may also be configured to perform the method steps related to variations of embodiments shown in the foregoing accompanying drawings. Details are not described herein again.

FIG. 9 is a diagram of a chip system 900 according to an embodiment of this application. The chip system 900 (or may be referred to as a processing system) includes a logic circuit 910 and an input/output interface (input/output interface) 920.

The logic circuit 910 may be a processing circuit in the chip system 900. The logic circuit 910 may be coupled and connected to a storage unit, and invoke instructions in the storage unit, so that the chip system 900 can implement the methods and the functions in embodiments of this application. The input/output interface 920 may be an input/output circuit in the chip system 900, and outputs information processed by the chip system 900, or inputs to-be-processed data or signaling information to the chip system 900 for processing.

Optionally, the logic circuit 910 may be implemented by one or more processors, including the one or more processors or a processing part of the one or more processors.

Optionally, the input/output interface 920 may include a transceiver circuit, a transceiver, an input/output circuit, or a communication interface.

In a solution, the chip system 900 is configured to implement an operation performed by the sending device or the receiving device in the foregoing method embodiments.

Specifically, the logic circuit 910 is configured to implement a processing-related operation performed by the sending device or the receiving device in the foregoing method embodiments. The input/output interface 920 is configured to implement a sending-related and/or receiving-related operation performed by the sending device or the receiving device in the foregoing method embodiments.

An embodiment of this application further provides a computer-readable storage medium. The computer-readable storage medium stores computer instructions used to implement the method performed by the first device or the ONU device in the foregoing method embodiments.

For example, when the computer program is executed by a computer, the computer is caused to implement the method performed by the first device or the ONU device in the foregoing method embodiments.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, such as a USB flash drive, a removable hard disk, a read-only memory, a random access memory, a magnetic disk, or an optical disc.

It is clear that a person skilled in the art may make various modifications and variations to embodiments of this application without departing from the scope of embodiments of this application. In this way, if these modifications and variations to embodiments of this application fall within the scope of the claims of this application and their equivalent technologies, this application is also intended to cover these modifications and variations.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application; but it should not be considered that the implementation goes beyond the protection scope of this application.

In several embodiments provided in this application, it should be understood that the disclosed apparatuses and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting data, comprising:
mapping i first optical transport network OTN signal to a second OTN signal, wherein the second OTN signal comprises n third OTN signals, a mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1;
generating a fourth OTN signal from the second OTN signal at an interleaving granularity of X bytes; and
sending the fourth OTN signal.

2. The method according to claim 1, wherein X is 32.

3. The method according to claim 1 or 2, wherein
the fourth OTN signal comprises n slots, and the second OTN signal to which the j^{th} first OTN signal is mapped corresponds to nⱼ slots of the n slots.

4. The method according to claim 3, wherein each of the n slots is at 100 Gbit/s.

5. The method according to any one of claims 1 to 4, wherein the n third OTN signals are n flexible optical transport network FlexO instances, the second OTN signal to which the j^{th} first OTN signal is mapped is nⱼ FlexO instances, the fourth OTN signal comprises the n FlexO instances, and a rate of each of the n FlexO instances is 100 Gbit/s.

6. The method according to any one of claims 1 to 4, wherein the n third OTN signals are n FlexO instances, the second OTN signal to which the j^{th} first OTN signal is mapped is an OTN signal formed by nⱼ FlexO instances, the fourth OTN signal comprises the n FlexO instances, and a rate of each of the n FlexO instances is 100 Gbit/s.

7. The method according to any one of claims 1 to 6, wherein n=n₁+n₂+...+nⱼ+nᵢ.

8. The method according to any one of claims 1 to 7, wherein the rate of the j^{th} first OTN signal is 100 Gbit/s*nⱼ.

9. The method according to any one of claims 1 to 8, wherein a rate of the fourth OTN signal is 1.6 Tbit/s.

10. The method according to any one of claims 1 to 9, wherein the fourth OTN signal comprises an overhead area, the overhead area comprises a payload type PT, and the PT indicates that a slot granularity is 100 Gbit/s.

11. The method according to any one of claims 1 to 10, wherein the first OTN signal is an optical data unit ODU or a FlexO channel layer signal.

12. A method for transmitting data, comprising:
receiving a fourth OTN signal;
deinterleaving the fourth OTN signal at a granularity of X bytes to obtain a second OTN signal, wherein the second OTN signal comprises n third OTN signals; and
demapping i first OTN signals from the second OTN signal, wherein a mapping granularity used for mapping a j^{th} first OTN signal of the i first OTN signals to the second OTN signal is nⱼ*X bytes, a rate of the j^{th} first OTN signal is nⱼ times a base rate, i is an integer greater than or equal to 1, j=1, 2, 3, ..., i, nⱼ is an integer greater than or equal to 1, and n and X are integers greater than 1.

13. The method according to claim 12, wherein X is 32.

14. The method according to claim 12 or 13, wherein
the fourth OTN signal comprises n slots, and the second OTN signal to which the j^{th} first OTN signal is mapped corresponds to nⱼ slots of the n slots.

15. The method according to claim 14, wherein each of the n slots is at 100 Gbit/s.

16. The method according to any one of claims 12 to 15, wherein the n third OTN signals are n flexible optical transport network FlexO instances, the second OTN signal to which the j^{th} first OTN signal is mapped is nⱼ FlexO instances, the fourth OTN signal comprises the n FlexO instances, and a rate of each of the n FlexO instances is 100 Gbit/s.

17. The method according to any one of claims 12 to 15, wherein the n third OTN signals are n FlexO instances, the second OTN signal to which the j^{th} first OTN signal is mapped is an OTN signal formed by nⱼ FlexO instances, the fourth OTN signal comprises the n FlexO instances, and a rate of each of the n FlexO instances is 100 Gbit/s.

18. The method according to any one of claims 12 to 17, wherein n=n₁+n₂+...+nⱼ+nᵢ.

19. The method according to any one of claims 12 to 18, wherein the rate of the j^{th} first OTN signal is 100 Gbit/s*nⱼ.

20. The method according to any one of claims 12 to 19, wherein a rate of the fourth OTN signal is 1.6 Tbit/s.

21. The method according to any one of claims 12 to 20, wherein the fourth OTN signal comprises an overhead area, the overhead area comprises a payload type PT, and the PT indicates that a slot granularity is 100 Gbit/s.

22. The method according to any one of claims 12 to 21, wherein the first OTN signal is an optical data unit ODU or a FlexO channel layer signal.

23. A network device, comprising: a processor and an input/output interface, configured to: perform the method according to any one of claims 1 to 11, or perform the method according to any one of claims 12 to 22, wherein
the input/output interface is configured to: receive and send an OTN signal; and
the processor is configured to process the OTN signal.

24. An optical module, wherein the optical module comprises a signal processor and an optical transmitter component, wherein
the signal processor is configured to perform the method according to any one of claims 1 to 11; and
the optical transmitter component is configured to: convert the fourth OTN signal into an optical signal, and send the optical signal.

25. An optical module, wherein the optical module comprises a signal processor and an optical receiver component, wherein
the optical receiver component is configured to: receive an optical signal, and convert the optical signal into the fourth OTN signal; and
the signal processor is configured to perform the method according to any one of claims 12 to 22.

26. An optical chip, wherein the chip comprises a processor and a communication interface, wherein
the processor is configured to perform the method according to any one of claims 1 to 11; and
the communication interface is configured to: convert the fourth OTN signal into an optical signal, and send the optical signal.

27. An optical chip, wherein the chip comprises a processor and a communication interface, wherein
the communication interface is configured to: receive an optical signal, and convert the optical signal into the fourth OTN signal; and
the processor is configured to perform the method according to any one of claims 12 to 22.
